# EUROPEAN PATENT APPLICATION

(11) **EP 2 620 842 A1**
(43) Date of publication of application: **31.07.2013**
(21) Application number: 13152002.5
(22) Date of filing: 21.01.2013
(51) Int. Cl.: G06F 3/039, A41D 19/00, G06F 3/0354

(54) **Capactive touch sensitive moisture resistant glove**

(30) Priority: 26.01.2012 US 201213359412
(71) Applicant: SCOSCHE INDUSTRIES, INC., Oxnard, CA 93033 (US)
(72) Inventor: Alves, Vince, Oxnard, CA California 93033 (US)
(74) Representative: Fitchett, Stuart Paul

(57) **Abstract**

A capacitive touch sensitive glove includes a glove having a moisture penetration resistant material forming interior and exterior portions of the glove, and an electrically conductive element extending through the material from the interior to the exterior portions, wherein the conductive element is arranged with the material to prevent transmission of moisture between the interior and exterior portions.

## Description

### BACKGROUND

### Field

The present disclosure relates generally to moisture resistant gloves and more particularly to moisture resistant gloves enabling a user to operate capacitive touch sensitive devices such as cell phones and media players while wearing the gloves.

### Background

Consumers are increasingly becoming accustomed to operating interactive devices with touchscreen technology based on capacitive sensing. This technology generates a continuing demand for devices with user friendly and intuitive interfaces, such as, for example, smart phones like the Apple iPhone^{TM} and tablets like the Apple iPad^{™}. Such demand includes access to such user friendly devices under varied and often less than user friendly circumstances. For example, outdoor winter sports enthusiast, such as snow boarders and skier, wear insulated water repellant or water resistant gloves for comfort. At the same time, widespread cellular coverage enables a sports enthusiast to communicate while also enjoying the winter outdoor environment. Gloves for such extreme weather conditions often include an outer shell of leather, waterproof, water resistant, or water repellant material, such as GORE-TEX® fabric, water repellant aerosol treated fabric, and the like. Unfortunately, extreme weather gloves are not equipped with capacitive touch sensitive capability to operate a touchscreen device, and the glove has to be removed to operate the device. There is a need, therefore, for a water resistant extreme weather glove compatible with interactive touch screen devices.

### SUMMARY

In an aspect of the disclosure, a capacitive touch sensitive glove includes a glove having a moisture penetration resistant material forming interior and exterior portions of the glove, and an electrically conductive element extending through the material from the interior to the exterior portions, wherein the conductive element is arranged with the material to prevent transmission of moisture between the interior and exterior portions.

In an aspect of the disclosure, a method of making a capacitive touch sensitive glove compatible with capacitive touchscreen devices includes providing a glove comprising a moisture penetration resistant material forming interior and exterior portions of the glove, and attaching at least one electrically conductive element to the glove extending through the material from the interior to the exterior portions, wherein the conductive element is arranged with the material to prevent transmission of moisture between the interior and exterior portions.

In an aspect of the disclosure, a glove operable with a touchscreen device, includes a moisture penetration resistant material arranged to define an interior and an exterior portion of the glove, wherein the interior portion is arranged to receive a user's hand, and an electrically conductive element extending through the moisture penetration resistant material to permit electrical conduction from the user's hand interior to the glove to the device touchscreen exterior to the glove.

### BRIEF DESCRIPTION OF THE DRAWINGS

FIG. 1 is a conceptual illustration of a glove compatible with capacitive touchscreen devices in accordance with an aspect of the disclosure.

FIG. 2A is a cross-section of a conceptual illustration of an electrically conductive element for use in the glove of FIG. 1.

FIG. 2B is a cross-section view of a conceptual illustration of the electrically conductive element of FIG. 2A arranged with a finger of the glove of FIG. 1.

### DETAILED DESCRIPTION

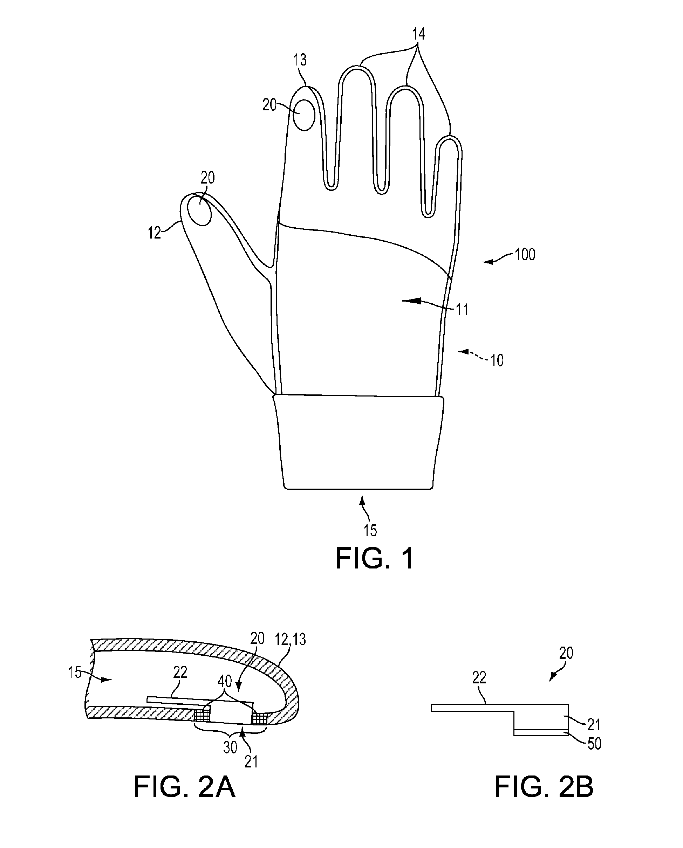

FIG. 1 is a conceptual illustration of a snow glove 100 compatible with capacitive touchscreen devices. The glove comprises a back 10 (indicated with a phantom lead line), a palm 11, and a plurality of fingers including a thumb 12, an index finger 13 and additional fingers 14 to accommodate the hand and fingers of a user within an interior 15 of the glove. The glove includes an outer surface that is waterproof and/or resistant to penetration of moisture. Various materials that may be used in such gloves include leather, GORE-TEX® fabric, water repellant aerosol treated fabric, and the like, but are not limited to the materials mentioned.

The thumb 12 and index finger 13 are shown arranged with an electrically conductive element 20 preferably in the vicinity of the finger tips, although the electrically conductive element may be arranged elsewhere on any portion of the fingers 12, 13, 14, or even on the back 10 or palm 11 of the glove.

Referring to FIG. 2, the electrically conductive element 20 includes an exterior portion 21 that is arranged with an outer surface of the glove 100 and an interior portion 22 that penetrates through a hole 30 in the glove at a selected location, such as the thumb 12, index finger 13, or elsewhere. The interior portion 22 is arranged in contact with the user's skin when worn by the user.

The electrically conductive element 20 is arranged with the glove 100 through the hole 30 to prevent moisture from passing through the hole 30, with the intention of keeping the user's hand dry when, for example, the user is engaged in outdoor winter sports, such as skiing, snowboarding, ice climbing, etc. To that end, the electrically conductive element 20 and hole 30 may be configured with a water impermeable seal 40 to prevent the moisture from passing through the hole 30 along or around the electrically conductive element 20.

In one aspect of the disclosure, the water impermeable seal 40 may be a curable adhesive sealant, such as a curable polymer, for example, between the electrically conductive element 20 and the hole 30. Alternatively, the water impermeable seal 40 may be obtained by sewing the electrically conductive element 20 into the hole 30 and sealing with an adhesive sealing tape or material placed over the stitching, such as GORE-SEAM@ tape, or the like.

In another aspect of the disclosure, the electrically conductive element 20 may be formed from a one or more conductive fibers substantially impregnated with the water impermeable seal 40, where the water impermeable seal 40 may be a curable adhesive sealant. Thus, the impregnated electrically conductive element 20 may be positioned in the hole 30 of the glove 100, and the sealant allowed to cure. Alternatively, the sealant in the electrically conductive element 20 may be cured first, and then additional sealant applied at the hole 30 when the electrically conductive element 20 is positioned in the hole 30, and the additional sealant may be cured.

In another aspect of the disclosure, the electrically conductive element 20 may be formed from a water impermeable seal 40 comprising, for example, the curable sealant, which has been impregnated with one or more conductive fibers. The conductive fiber impregnated water impermeable seal 40 may be installed in the glove using additional sealant applied at the hole 30, as above, which is then cured. Alternatively, as described above, adhesive sealing tape may be applied to provide the water impermeable seal 40.

The conductive fibers may be any of filamentary conductive carbon fibers, filamentary metal wires, filamentary semiconductor fibers, or the like.

In an aspect of the disclosure, the electrically conductive element 20 may terminate at the fingertip in a conductive cap 50 or plate, and the cap 50 or plate may be positioned at the exterior portion 21 to enable conductive contact to a touchscreen, at the interior portion 22 to enable conductive contact the user's skin, or both. The cap 50 may be in electrical contact with the one or more conductive fibers or other conductive material from which the electrically conductive element 20 is formed. The interior portion 22 is positioned to be in contact with the user's skin when the glove 100 is properly worn.

When the user wished to access applications on a touchscreen device, the electrically conductive element 20 provide continuity between the capacitive touch sensitive screen and the users skin as if the user had applied his fingertips directly to the screen.

In an aspect of the disclosure, the electrically conductive element 20 may include an inelastic or elastic material, such as plastic, rubber, a curable polymer, or the like, charged with conductive particles, such as silver or other conductive granules.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The claims are not intended to be limited to the various aspects of this disclosure, but are to be accorded the full scope consistent with the language of the claims. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## Claims

1. A glove having interior and exterior surfaces;
a moisture penetration resistant layer; and
an electrically conductive element, wherein the conductive element extends through the moisture penetration resistant layer to permit electrical conduction from a user's hand interior of the glove to a touchscreen device exterior of the glove.

2. The glove of claim 1, wherein the glove comprises a plurality of fingers, and wherein at least one finger comprises the electrically conductive element extending between the interior surface and the exterior surface.

3. The glove of Claim 1 or 2, wherein the conductive element is arranged with the moisture penetration resistant layer to prevent transmission of moisture between the interior and exterior surfaces.

4. The glove of claim 3, further comprising a moisture impermeable seal between the electrically conductive element and the moisture penetration resistant layer to prevent the transmission of moisture between the interior and exterior surfaces.

5. The glove of claim 4, wherein the moisture impermeable seal is impregnated with the electrically conductive element.

6. The glove of claim 4 or 5, wherein the moisture impermeable seal comprises a curable polymer.

7. The glove of any preceding claim, wherein the electrically conductive element comprises at least one conductive fiber.

8. The glove of claim 7, wherein the electrically conductive element comprises at least one of a filamentary conductive carbon fiber, a filamentary metal wire, a filamentary semiconductor fiber, and conductive particles.

9. The glove of any one of Claims 1 to 6, wherein the electrically conductive element comprises conductive particles.

10. The glove of any preceding claim, further comprising an electrically conductive cap coupled to said electrically conductive element.

11. A method of making a capacitive touch sensitive glove compatible with capacitive touchscreen devices comprising:
providing a glove comprising a moisture penetration resistant material forming interior and exterior portions of the glove; and
attaching at least one electrically conductive element to the glove extending through the material from the interior to the exterior portions, wherein the conductive element is arranged with the material to prevent transmission of moisture between the interior and exterior portions.

12. The method of claim 11, further comprising locating the electrically conductive element in at least one of a plurality of fingers formed from the glove material, wherein the electrically conductive element extends between the interior portion and the exterior portion.

13. The method of claim 11 or 12, further comprising forming a moisture impermeable seal between the electrically conductive element and the material to prevent the transmission of moisture between the interior portion and the exterior portion.

14. The method of claim 12, further comprising forming the moisture impermeable seal with a curable polymer.

15. The method of claim 12, further comprising forming a conductive cap on the electrically conductive element at the exterior portion of the material.

16. The method of claim 12, further comprising forming the glove with one or more fingers and arranging the penetrating conductive element with at least one of the fingers to extend through the material from the interior to the exterior portions.
